# EUROPEAN PATENT APPLICATION

(11) **EP 4 800 474 A1**
(43) Date of publication of application: **02.09.2026**
(21) Application number: 25160477.3
(22) Date of filing: 27.02.2025
(51) Int. Cl.: G03B 17/56, G08B 13/196, H04N 23/55, H04N 23/695, G02B 27/00

(54) **A DOME CAMERA ARRANGEMENT WITH IMPROVED OPTICAL PERFORMANCE**

(71) Applicant: Axis AB, 223 69 Lund (SE)
(72) Inventor: Axelsson, Fredrik, 22369 LUND (SE); Persson, Henrik, 22369 LUND (SE); Zhou, Jianfeng, 22369 LUND (SE); Bates, Warren, 22369 LUND (SE); Björk, Ola, 223 69 LUND (SE); Sievert, Thomas, 22369 LUND (SE); Folsom, Benjamin, 22369 LUND (SE)
(74) Representative: AWA Sweden AB

(57) **Abstract**

A dome camera arrangement comprising one or more camera heads, arranged in a transparent dome is disclosed. Each camera head comprises an optics unit (118), a panning device, for moving the camera head in a panning movement, and a tilting device (110) for moving the camera head (104) in a tilting movement. The tilting device (110) has a pivot portion (116) and a cradle portion (112). The camera head further has a roll device (124) for rotating the optics unit (118) in a roll movement. A compensation lens (122) is arranged in a compensation lens fitting (120) in front of the optics unit, and the compensation lens fitting is connected to the panning device and the tilting device (110), such that the compensation lens (122) will move with the camera head in panning movement and tilting movement. However, the compensation lens fitting is disconnected from the same features such that the compensation lens (122) will not follow the optics unit (118) in roll movement, thus enabling an adequate optical compensation by means of the compensation lens.

## Description

### Technical field

The present invention relates to the field of dome cameras, and in particular to improvements in dome cameras in relation to image quality.

### Background

A dome camera is a common type of monitoring or surveillance camera. One or more camera heads are arranged on a base and a have a transparent dome that protects the camera head(s) from the surroundings. The (or each) camera head may be individually oriented in a pan direction (usually corresponding to sideways), a tilt direction (usually corresponding to up and down), and rotational direction (or roll). Pan and tilt are used to orient the camera in a preferred direction. Roll may be used to compensate for imperfections in mounting, or to rotate an imaging unit 90 degrees to shift between different imaging formats, e.g. landscape format and corridor format.

The (or each) camera head may also be provided with a zoom feature, so as to be able to acquire both close-up images and images with wider field of view.

The word "dome" in "dome camera" should not be narrowly interpreted. The actual shape of the transparent cover (the dome) may differ from that of a portion of a sphere, such as a hemisphere, and this is particularly true for the dome used in a device of the present invention. Although the working principle is the same regardless of the shape of the dome, any shape departing from spherical (or the other extreme, planar) may introduce imaging issues due to asymmetric curvature and refraction, often referred to as astigmatism.

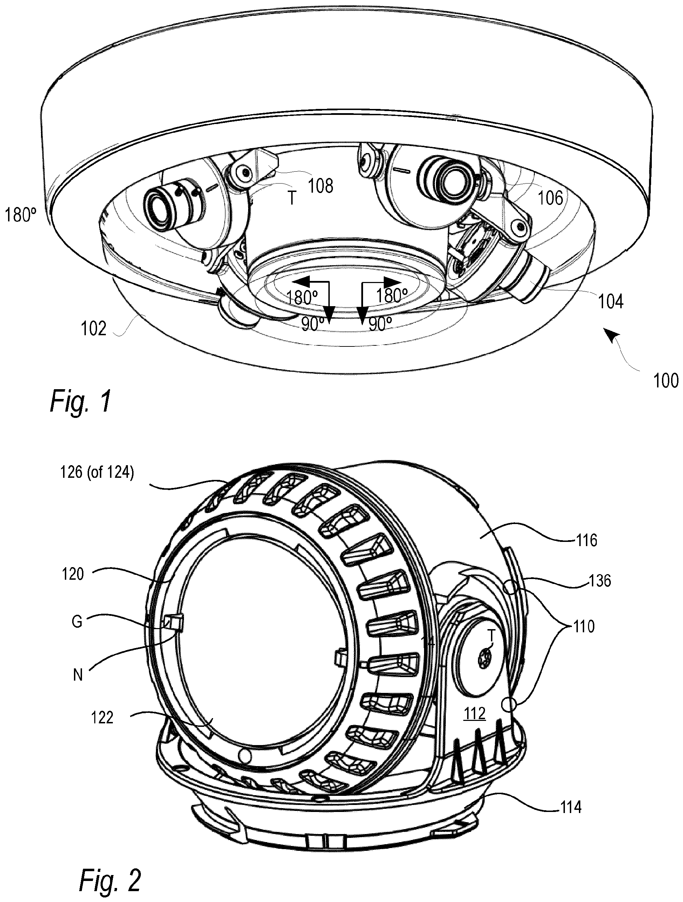

FIG. 1 illustrates a monitoring camera system 100 in a perspective view thereof. The transparent dome 102 is indicated rather than fully illustrated to allow for viewing the camera heads 104 arranged under it. The camera heads 104 are seen arranged on a guide rail 106 via a mount 108. The camera heads 104 are pivotally arranged on the mount 108, thus providing the tilt axis, and they may also be rotated on the mount (actually a portion of the mount is rotated) so as to allow for pan. Each camera head 104 may be moved along the rail 106 in order to optimize a field of view, this motion will also result in a pan of sorts, since the field of view will shift in accordance with a curvature of the rail. For the purposes of the present application both rotation in the mount, sometimes referred to as "twist, "yaw" or "pan" and sliding essentially sideways along a guide, sometimes referred to as "truck", will be included in the concept of "pan" or "panning". The reason is that from a field of view aspect, in the context of the present invention, the effect will be similar.

All motions may be motorized, although they do not have to be. Similar and further embodiments of this type of camera arrangement 100 are described in patents of the present applicant, e.g. in US 9 715 165, from which Fig. 1 is acquired, and US 11 226 545. For details concerning possible shapes of the dome, the skilled person is referred to these patents, as well as to the AXIS P37 Panoramic Camera Series, including AXIS P3735-PLE, AXIS P3737-PLE, and AXIS P3738-PLE. It may be emphasized that the applicability of the present invention, to be described, is not limited to these prior art examples, they are merely provided since they include detailed descriptions of a context where it may be used.

A camera head 104 as used in the devices of the cited patent documents may be slid or moved along a rail 106 of sorts, to be positioned at any location along the circumference of the camera arrangement. Once at the desired position it may be fixed, and consecutively the field of view may be finetuned using tilt and pan (manually or automatically). As the camera head 104 is moved along the rail 106 or guide, its positional relationship to surfaces of the dome 102 will remain unaltered, so during this panning motion distortions due to refraction in the dome 102 will essentially be constant. Once at a fixed position the pan accomplished by rotation relative to a base will alter a relative angle in relation to the dome, and thus the resulting distortion. In comparison to the distortion resulting from the curvature of the dome 102, this distortion due to the relative angle is less pronounced.

Closing in on the problem addressed by the present invention, the transparent dome has a toroidal shape, meaning that a radius of a surface of the dome will differ between the plane in which pan (or slide) occurs and the plane in which tilt occurs. For a more elaborate description of the shape, reference is made to the above cited prior art. This, in combination with that the dome has a thickness and a refractive index differing from that of air, will result in the aforementioned astigmatism. This in turn will render it impossible to obtain a perfect focus. The effect will be more pronounced for telephoto situations (when imaging in a highly zoomed in mode), since small effects will be more visible. It will also be more pronounced when using a large lens aperture, since that means that a larger part of the dome surface will be included in the beam path. This effect is pronounced during low light conditions since the lens aperture will be larger, but also in telephoto mode.

Prior art solutions include limiting the zoom values available, and limiting the aperture opening, in order to avoid imaging situations where the effect is too noticeable.

For the sake of completeness, it should be mentioned that using corrective optics is known in prior art for dome cameras having a hemispherical dome, where in particular issues relating to a transition between a hemispherical portion and a cylindrical portion of the dome needs to be addressed. This is disclosed in WO 2012/092438, where a fixed compensation glass is utilized, and in US 9 733 451, disclosing a lens that follows movements of the camera optics.

For the purposes of the present invention the transparent dome, even if there is a difference for different planes, will have a rotational symmetry. This results in an optical "situation", for lack of a better word, which is similar for all cameras under the dome.

### Summary of the invention

In view of the above, it is thus an object of the present invention to mitigate the above problems and provide a method and a system in accordance with claim 1. More specifically, a dome camera arrangement comprises one or more camera heads, each featuring an optics unit, a panning device, a tilting device, and a roll device. The tilting device includes a pivot portion and a cradle portion, while the roll device enables rotation of the optics unit. A compensation lens is positioned in front of the optics unit, connected to the panning and tilting devices via a compensation lens fitting. This allows the compensation lens to move with the camera head during panning and tilting, but not during roll movements.

In one or more embodiments the camera head includes a base that is rotationally or fixedly attached to the tilting device via its cradle portion. This attachment provides stability and support to the camera head, enabling smooth panning and tilting movements.

In several embodiments the roll device is rotationally attached to the pivot portion of the tilting device. This configuration allows for seamless integration of the roll device with the tilting mechanism, facilitating efficient camera control and perfect synchronization in motion.

For the same reason the compensation lens fitting is preferably fixedly attached to the pivot portion of the tilt device. This secure attachment ensures that the compensation lens remains properly aligned with the optics unit, even during complex camera movements.

In one or more embodiments the base of the camera head is operationally connected to a guide, along which it may slide to achieve a panning motion. This sliding mechanism enables smooth and controlled panning movements, allowing the camera to capture a wide range of scenes even if the camera arrangement is located in a single position.

It is preferential that the compensation lens fitting is designed to have a mating fit with the compensation lens, since this ensures a failsafe orientation of the compensation lens in relation to the compensation lens fitting and the transparent dome. In this way it is ensured to gain the most from the invention.

The invention may suggestively be applied in a camera arrangement where the transparent dome has a toroidal shape. In such an embodiment, the corrective effect of the compensation lens is optimized for a predetermined tilt angle of the camera head. This optimization ensures that the camera captures high-quality images with minimal distortion, even at extreme predetermined tilt angles.

In a related embodiment, the corrective effect of the compensation lens is optimized to minimize a refractive error over a predetermined interval of tilt angles. This optimization enables the camera to capture as clear and sharp images as possible over a range of tilt angles, thus providing a more versatile solution.

In a specific version of the former embodiment the predetermined interval of tilt angles corresponds to tilt angles where the camera head is directed outwardly from the center of the toroidal shape. This specific optimization ensures that the camera captures high-quality images when pointed towards the periphery of the dome, where refraction errors may be most pronounced since objects are likely to be the farthest away from the camera arrangement.

In any embodiment the camera base may be slidably arranged on or in relation to a guide, allowing it to slide along the toroidal shape in a panning direction without altering the optical relationship with the transparent dome. This sliding mechanism enables smooth panning movements while maintaining optimal image quality.

The arrangement comprises multiple camera heads, providing enhanced surveillance capabilities and increased flexibility. Each camera head can be independently controlled, allowing for comprehensive coverage of a scene.

The compensation lens fitting may in one or more embodiments comprise a lens holder part and two attachment arms that connect the lens holder part structurally to the tilt device. This design ensures a secure and stable attachment of the compensation lens, even during intense camera movements.

The previously mentioned roll device could have a roll dial and two connection tabs that are configured to connect the roll device directly or indirectly to the optics unit. This modular design enables easy integration of the roll device with the optics unit, as well as a simplified assembly process.

In one version of the embodiment mentioned above, the roll device is configured to cooperate with a mounting base of the optics unit to position the optics unit in the pivot portion. This cooperative design ensures accurate positioning of the optics unit, as well as a simplified assembly process. For the purposes of providing an adequate frictional hold, and to absorb tolerances, a wave spring or similar may be arranged between the surfaces of the assembly, e.g., between a surface of the roll dial and a surface of the pivot portion.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 is a perspective view of a camera arrangement according to prior art.
Fig 2 is a perspective view of a camera head as used in some embodiments of the present invention.
Fig. 3 is an exploded view of the camera head shown in Fig. 2.
Figs. 4A and 4B are perspective views of interconnected parts of the camera head of Fig. 2, shown in isolation and from different angles.
Figs. 5A and 5B are perspective views of interconnected parts of the camera head of Fig. 2, shown in isolation and from different angles.

### Detailed Description of Embodiments

Fig. 1 has already been mentioned in the background section. It illustrates a monitoring camera system 100 comprising several monitoring camera heads 104 arranged inside a transparent dome 102. The dome 102 is formed from a transparent material, such as polycarbonate, and it has a toroidal shape with a rotational symmetry along a rotational angle around a first axis of symmetry. An outer segment of the dome 102, in section, has a shape further defined by a second axis of symmetry arranged at a first radius from the first axis of symmetry and being orthogonal to the first axis, wherein said outer segment has a curvature following a second radius over an angle around the second axis of symmetry.

It should be noted that though "rotational symmetry" is the most appropriate way of describing the shape in words, the dome does not have to extend over a full rotation (360 degrees), hence the use of "along a rotational angle". Moreover, though the second radius preferably is constant, there may be embodiments where the radius varies with the angle around the second axis of symmetry. An effect of the dome design may be that the arrangement of camera heads 104 within the protective area of the dome 102 will be simplified, and that the effects of image distortions will be reduced. The smaller second radius results in the overall height of the dome being reduced.

As mentioned in the background section, details of the general dome shape are disclosed in the cited prior art documents by the present applicant. For the purposes of the present invention, it suffices to understand that the resulting difference in curvature in different directions of the dome, and the fact that the dome has a wall thickness, will result in asymmetric refraction of light passing through the dome. This will generate the aforementioned astigmatism when imaging a scene using one of the camera heads 104. Returning to Fig. 1, and the monitoring camera system 100 shown there, the transparent dome 102 as it is oriented in the drawing, will have a curvature that, for a camera head 104 arranged under the dome, follows a larger circle in the horizontal direction and a smaller circle in the vertical direction. It is also readily understood that if a camera head 104 is tilted, i.e., rotated around axis T, it will still see the same curvature in the vertical direction, yet the curvature in the horizontal direction will change due to the toroidal shape of the dome 102. Also, if a camera head 104 is moved/slid along the guide rail 106, or similar contraption, the optical situation will not be affected, while if the camera head 104 is rotated in or by its mount 108, in a horizontal plane, its angle in relation to the dome 102 will change, and consequently so will the optical situation. 'Optical situation' refers to how light reaching an optics unit 116 of the camera head will have been affected by the presence of the dome.

A monitoring camera arrangement 100 of the illustrated type is typically configured to be mounted in the orientation shown in Fig. 1, with the dome 102 facing downwards. It may be in a ceiling of a structure, or in a camera mount (not shown) arranged on a pole or on a wall, etc., indoors or outdoors. In such a typical use case objects below the camera arrangement will be closer to the camera arrangement, and as a camera head 104 is tilted more and more radially outwards, the field of view will include more distant objects since it will shift from looking downwards into the floor or ground, to looking towards a horizon. In effect, this will mean that a telephoto mode will, typically, only be of need when a camera head 104 is directed radially outwards. An implication of this is that even if the optical situation changes as a camera head is tilted, a satisfactory compensation may be achieved by optimizing a correction factor for tilt angles in an interval radially outwards. The effect may be that even if this compensation may worsen the optical situation for other angles, the fact that, in those other angles, imaged objects will be closer to the camera arrangement will make the resulting artifacts negligible. In general, the inventive solution will address the major contribution to astigmatism to the extent that even for angles where the compensation is not optimal, the situation will be significantly improved.

In a situation where the camera arrangement 100 is mounted such that other parameters should be considered when finetuning the compensation it would still be within the realms of the present invention.

A camera head 104 with the inventive capabilities is shown in Fig. 2. Similar to the camera heads of Fig. 1 it is arranged in a mount 108 having a tilt axis T connecting it to a cradle portion 112 of a tilting device 110. The cradle portion 112 also has a portion 114 enabling the panning functionality by being configured to be rotationally connected to a camera base (not shown in Fig. 2). At its other end the cradle portion 112 connects to a pivot portion 116 of the tilting device 110, and the pivot portion 116 localizes an optics unit 118 of the camera head 104. The optics unit 118 includes all optics and electronics needed for image acquisition. Thus far what is described is any pan-tilt-camera, and details and alternatives are obvious for the skilled person, and examples of solutions may be found in any commercial dome camera having a pan-tilt functionality. The camera head 104 also includes the possibility of turning the optics unit 118 in the pivot portion 116, so as to perform a roll. This may typically be utilized when switching between landscape-mode and portrait mode imaging, the latter is sometimes referred to as corridor format.

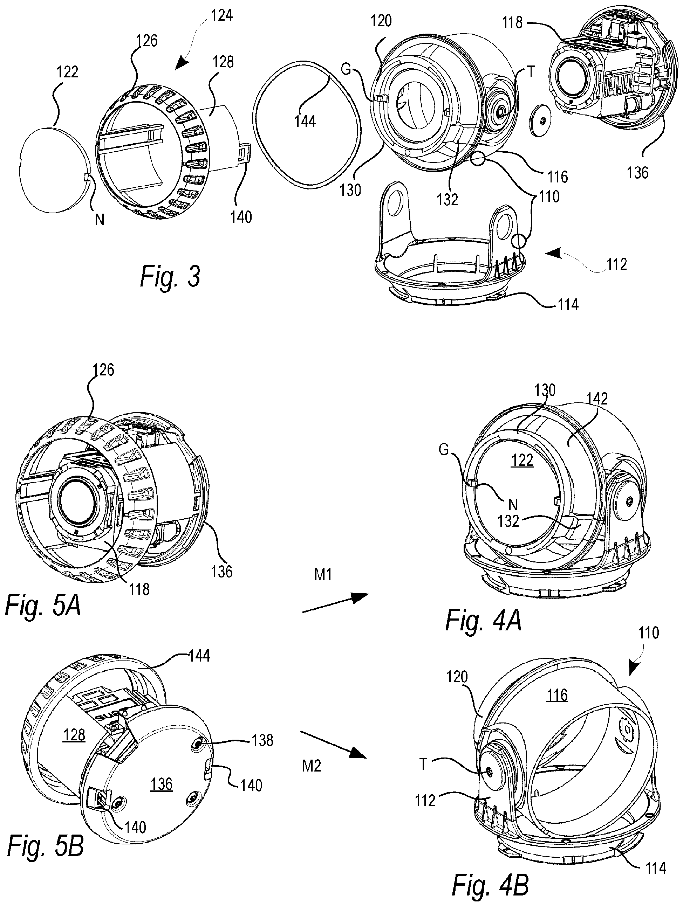

For further details of the camera head, reference may additionally be made to Fig. 3. The camera head 104 of the present embodiment also includes a compensation lens fitting 120 rigidly attached to the pivot portion 116. The compensation lens fitting 120 preferably has a shape so that an orientation of a compensation lens 122 arranged therein is fixed. For the present embodiment, this feature is provided by means of guides G having a mating fit with notches N in the compensation lens 122 or in a bezel (not shown in this embodiment) of the compensation lens 122.

In order to simplify roll of the optics unit 118 a roll device 124 is also included. At one end it connects to the optics unit 118, or to a mounting base 136 thereof. In the present embodiment it is connected by means of a snap fit functionality at the end of connection tabs 128 extending from a roll dial 126. The roll dial 126 is positioned to be accessible for effecting the roll, and the tabs 128 extend the pivot portion 116 (on an inside thereof). This enables for the roll device 124 to rotate at least 90 degrees without interference between the connection tabs 128 and attachment arms 132 (to be described) of the compensation lens fitting 120, i.e., enables for it to rotate sufficiently to shift between aspect ratios. The connection tabs could be fastened using another fastening mechanism than a snap fit, such as an adhesive, a weld, screws, etc.

To summarize the effects accomplished: When the camera is tilted, the pivot portion 116 will be rotated in relation to the cradle portion 112. The optics unit 118 and the roll device 124 will follow the tilt motion, and the compensation lens 122 will obviously too, since the compensation lens fitting 120 is attached to the pivot portion 116. This means that the compensation lens 122 orientation will be maintained in relation to both a camera dome 102 and the optics unit 118 of the camera head 104. When the camera head 104, or rather the optics unit 118 thereof, is rotated in a roll direction, however, by turning the roll dial 126 of the roll device 124, the optics unit 118 will rotate inside and in relation to the pivot portion 116, meaning that the compensation lens fitting 120 and the compensation lens 122 remain static. Consequently, also in this case the compensation lens 122 orientation will be maintained in relation to the camera dome, 102 i.e., in relation to the component introducing astigmatism.

The exemplified construction will be an enabler for the present invention and is as such a part thereof. Still, the same functionality may be accomplished in other ways. Apart from different constructional solutions for connecting the lens to the tilt device, of which there should be several, it would also be possible to shape the compensation lens as an elongate, essentially U-shaped, band extending over all tilt angles of the camera. The lens could attach to, e.g., the cradle portion or the camera base, such that it moves along with movement of the camera head as it moves in a panning direction. Although theoretically possible, this solution is likely to be rather complicated and costly, even if it would enable for the compensation to be optimized for each angle.

Figs. 4 and 5 illustrate the described components in an interconnected state, so as to facilitate further understanding of the exemplified mechanism in an operational configuration. Figs. 4A and B illustrate the compensation lens fitting 120 connected to the tilting device 110, while Figs. 5A and B illustrate the roll device 124 connected to the optics unit 118. The compensation lens fitting 120 essentially comprises a lens holder part 130 and two attachment arms 132 extending from the lens holder part 130. A free end of each attachment arm has means for connecting the attachment arm 132 to the pivot portion 116 of the tilt device 110. These means may be snap fasteners or screw arrangements, so as to enable releasable connection, yet may also include surfaces enabling welding or gluing the attachment arms to the pivot portion. The attachment arms will provide room for the inventive functionality, and another benefit is that they will have a flexibility that enables absorption of impact forces if the camera arrangement is subject to tampering. With this feature in mind, it is beneficial if the attachment arms are formed from a softer, more flexible, plastic than the lens holder, and an appropriate manufacturing method for achieving this is a 2K moulding. Forming both components, the compensation lens fitting 120 and the pivot portion 116, in one material is indeed possible. The required flexibility could be provided by structural means, by designing the attachment arms appropriately, and it would also be possible to form each part separately and then assemble at a later stage. However, 2K moulding is an established technique for co-forming two compatible materials of different properties, and it is therefore the preferred method. Regarding the tilt device, the pivot portion and the cradle portion may be formed from glass fiber, reinforced for stability and rigidity, yet other options are possible. As mentioned, the compensation lens fitting is preferably formed from a softer material, so as to have an adequate flex when needed. Figs. 4A and B also show the cradle portion 112, yet this has already been described in some detail with the possible exception that Fig. 4B shows both sides of how the pivot portion 116 is attached to the cradle portion 112. When using manual tilt, the camera head 104 is tilted to the desired angle, after which this attachment is tightened from the outside to lock the tilt angle. This is well known from prior art products.

The compensation lens 122 is positioned in the lens holder 130, and while the latter has protruding guides G, the former has fitting notches N, enabling exact positioning of the compensation lens 122 in a roll direction. The compensation lens 122 may be held in place in the lens holder 130 by using snap means, a fastening ring, adhesive etc., yet in the presented embodiment an undercut protrusion of the lens holder will snap the compensation lens 122 into place against a ledge of reduced diameter protruding radially inwards, or in a circumferential groove in an inner perimeter of the lens holder 130.

As is shown in Figs. 5A and B the roll device 124 is attached to the optics unit 118 in a similar fashion. Connection tabs 128 extend from the roll dial 126 and connect to the optics unit 118, or to a mounting base 136 thereof, using snap means 140. In Fig. 5B it is shown how the mounting base 136 is fastened to a bottom side of the optics unit 118 by means of screws 138, and how snap means 140 are used to attach the connection tabs 128 to openings in the mounting base 136. The connection tabs 128 may be sturdier than the attachment arms 132 of the lens fitting 120, since they will be subjected to greater forces in operation, i.e., when a user turns the dial 126 to achieve a roll movement of the optics unit 118. Another reason for the design of the connection tabs 128 is that they will guide and localize the arrangement of Fig. 5, basically the optics unit 118, in the arrangement of Fig. 4, consequently an extended surface of engagement may be beneficial for stability. During assembly the connection tabs 128 of the roll device 124 are inserted in the clearance 142 between the lens holder 130 and the pivot portion 116, from the lens holder side, while the optics unit 118 is inserted from the other end. As the two components meet and the roll device 124 connects to the mounting base 136, the pivot portion 116 will be clamped between the two. A leaf spring 144 arranged between the roll dial and a ledge of the pivot portion will absorb tolerances and ensure that the optics unit does not move unless the roll dial is turned. This will provide a stable hold, while still allowing the optics unit 118 and related components to rotate inside the pivot portion 116, limited only by the lateral extension of the connection tabs 128 and the attachment arms 132. In the present embodiment these should be designed to allow for a rotation of at least 90 degrees, to allow for a roll between imaging modes (portrait or landscape).

An optical design of the lens will follow regular ophthalmic lens design. This is by no means a non-complex technical area but for the purposes of the present invention it will be regarded as a tool. In the context of ophthalmic lens design, the present lens will be far less complex given the symmetry of the distortion introduced by the dome, as compared to a situation where deficiencies in human vision are to be addressed. Consequently, we consider it to be reasonable that the design of the compensation lens will not be described in detail, but rather some design considerations. For example, it is not possible to design a compensation lens that is perfect for all tilt angles. Given, however, a typical installation for the type of camera arrangement, it will be reasonable to optimize the lens design for compensating a distortion introduced in a limited interval of possible tilt angles. For the discussion, an orientation radially inwards will be designated a 0-degree angle, and an orientation radially outwards will be designated a 180-degree angle. When a camera head is directed straight downwards (in the configuration of Fig. 1) it will have a tilt angle of 90 degrees, as indicated in the drawing.

In most foreseeable cases the optimized interval will be situated in the region between 90 and 180 degrees, and more likely with an interval center shifted towards 180 degrees, e.g., 135 degrees, 150 degrees, 160 degrees, 170 degrees, 175 degrees or increments therebetween, where interval center corresponds to an optical axis of the optics system in question. This would also correspond to a tilt angle of the camera head. The governing factor is the use case, and although the above would be a good representation for most use cases, it does not exclude other use cases where the setup could be optimized for other tilt angles or tilt angle intervals.

A rudimentary compensation lens may be designed by mimicking the design of a small segment of the dome and rotating it 90 degrees around the optical axis. This approach is disclosed in paragraph [0039] of WO2012/092438. The small segment is preferably sampled from within one of the preferred intervals, and the inventive suspension makes it work for the present invention as well. More elaborate design options are obviously both available and preferable. One could in practice model, using a ray-tracing tool, the situation and calculate a suitable compensation lens design, or in fact also use an autorefractor to measure and deduce suitable compensation lens properties.

The description has not been detailed concerning choice of material, since what is regularly used for similar camera arrangements may be used for the present embodiment as well.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A dome camera arrangement (100) comprising one or more camera heads (104), arranged in a transparent dome (102), each camera head (104) comprising:
- an optics unit (118),
- a panning device for moving the camera head in a panning movement,
- a tilting device (110) for moving the camera head (104) in a tilting movement, the tilting device (110) having a pivot portion (116) and a cradle portion (112),
- a roll device (124) for rotating the optics unit (118) in a roll movement,
- a compensation lens (122) arranged in front of the optics unit, wherein
- the compensation lens (122) is connected, via a compensation lens fitting (120), to the panning device and the tilting device (110), such that the compensation lens (122) is arranged to move with the camera head (104) in panning movement and tilting movement, and wherein
- the compensation lens (122) is arranged operationally disconnected from the roll device (124), such that the compensation lens (122) is prevented from following the optics unit (118) in roll movement.

2. The dome camera arrangement of any preceding claim, wherein the camera head (104) includes a camera base in relation to which the tilting device (110) is rotationally or fixedly attached via its cradle portion (112).

3. The dome camera arrangement of any preceding claim, wherein the roll device (124) is rotationally attached to the pivot portion (116) of the tilting device (110).

4. The dome camera arrangement of any preceding claim, wherein the compensation lens fitting (120) is fixedly attached to the pivot portion (116) of the tilt device (110).

5. The dome camera arrangement of any preceding claim, wherein the camera base of the camera head (104) is operationally connected to a guide (106), along which it may slide, to achieve a panning motion.

6. The dome camera arrangement of any preceding claim, wherein the compensation lens fitting (120) has a mating fit with the compensation lens (122), so as to ensure a correct orientation of the compensation lens in relation to the compensation lens fitting and thereby the transparent dome.

7. The dome camera arrangement of any preceding claim, wherein the transparent dome has a toroidal shape, and wherein a corrective effect of the compensation lens (122) is optimized for a predetermined tilt angle of the camera head (104).

8. The dome camera arrangement of any preceding claim, wherein the transparent dome has a toroidal shape (102), and wherein a corrective effect of the compensation lens (122) is optimized so as to minimize a refractive error over a predetermined interval of tilt angles.

9. The dome camera arrangement of claim 8, wherein the predetermined interval of tilt angles are tilt angles in which the camera head (104) is directed outwardly from a center of the toroidal shape.

10. The dome camera arrangement of any preceding claim, wherein the fact that the compensation lens (122) is arranged disconnected from the roll device (124), such that the compensation lens (122) is prevented from following the optics unit (118) in roll movement, also prevents the compensation lens (122) from rolling with the optics unit (118) during a zoom procedure.

11. The dome camera arrangement of any preceding claim, wherein the arrangement comprises multiple camera heads (104).

12. The dome camera arrangement of any preceding claim, wherein the compensation lens fitting comprises a lens holder part (130) and, extending from the lens holder part (130), two attachment arms (132) connecting the attachment arms structurally to tilt device.

13. The dome camera arrangement of any preceding claim, wherein the roll device (124) comprises a roll dial (126) and, extending from the roll dial, two connection tabs (128) that are configured to connect the roll device directly or indirectly to the optics unit.

14. The dome camera arrangement of claim 13, wherein the roll device (124) is configured to cooperate with a mounting base (136) of the optics unit (118) to position the optics unit (118) in the pivot portion (116).
